# EUROPÄISCHE PATENTANMELDUNG

(11) **EP 0 647 810 A1**
(43) Veröffentlichungstag der Anmeldung: **12.04.1995**
(21) Anmeldenummer: 94111854.9
(22) Anmeldetag: 29.07.1994
(51) Int. Cl.: F16L 15/06

(54) **Schraubteil mit Dichtung zur Herstellung einer dichten Gewindeverbindung**

(30) Priorität: 30.07.1993 DE 4325700
(71) Anmelder: Anton Hummel Verwaltungs-GmbH, D-79183 Waldkirch (DE)
(72) Erfinder: Gehring, Peter, D-79263 Simonswald (DE)
(74) Vertreter: Schmitt, Hans, Dipl.-Ing.

(57) **Zusammenfassung**

Eine Gewindeverbindung mit einem ein Innengewinde (5) aufweisenden Teil (9) und einem darin einschraubbaren Schraubteil (1) weist eine zumindest über einen Teil der axialen Erstreckung des Gewindebereiches verlaufende Dichtung (2) in Ring-, Hülsen- oder Napfform auf. Dabei weist wenigstens ein Abschnitt der in Gebrauchsstellung im Bereich der Dichtung (2) befindlichen Außenseite des Schraubteiles (1), bevorzugt sein mit Gewinde versehenes Endstück (4), einen in Einschraubrichtung zunehmenden Querschnitt oder Durchmesser, so daß der in Einschraubrichtung gemäß dem Pfeil (Pf1) vordere Bereich (6) einen größeren Querschnitt oder Durchmesser als der beim Einschrauben nachfolgende Bereich (7) hat. Der zwischen den Bereichen (6 und 7) liegende Bereich bewirkt bei einer der Einschraubbewegung entgegengesetzten Verdrehung eine Axialverstellung gegenüber der Dichtung (2) und damit aufgrund der etwa konischen Gestaltung deren radiale Verpressung, so daß eine Rückdrehbewegung die Dichtungswirkung nicht verschlechtert, sondern sogar verbessert.

## Beschreibung

Die Erfindung betrifft ein in ein Innengewinde einschraubbares Schraubteil mit einer zumindest über einen Teil seiner axialen Länge oder Erstreckung verlaufenden ring- oder hülsenförmigen Dichtung zur Herstellung einer dichten Gewindeverbindung.

Derartige Gewindeverbindungen sind beispielsweise aus DE-B-22 30 740, aus DE-U-74 20 596, aus US-A-2 407 553, aus DE-U-74 09 347 oder aus EP-A-0 554 111 in unterschiedlichen Variationen bekannt.

Die Dichtungshülsen sind dabei entweder gemäß DE-B-22 30 740 zunächst überwiegend glatt und werden durch den Schraubvorgang verformt, wobei sie auch schon einen ersten Gewindegang haben können, oder sie können gemäß DE-U-74 20 596 sowohl ein Außenals auch ein Innengewinde haben. Dies geht auch aus weiteren der vorgenannten Druckschriften hervor.

DE-U-74 09 347 zeigt eine Ausführungsform, bei welcher das Außengewinde des Schraubteiles unterbrochen ist und diese Unterbrechung durch eine ringförmige Dichtungshülse ausgefüllt ist, die an der Außenseite ein Gewinde hat, während in der EP-A-0 554 111 eine vergleichbare Anordnung gezeigt ist, bei welcher aber diese ringförmige Dichtungshülse, die in eine Ringnut im Außengewinde des Schraubteiles eingefügt ist, eine in Einschraubrichtung sich konisch verjüngende Außenseite hat.

Man erkennt bei all diesen Lösungen das an sich naheliegende Bemühen der Fachwelt, das Einschrauben mit einer solchen Dichtungshülse nicht zu erschweren, sondern im Gegenteil möglichst zu erleichtern, selbst wenn gemäß EP-A-0 554 111 an der Außenseite zunächst keine Gewindegänge vorhanden sind, also sich die Außenseite der Dichtungshülse an das Innengewinde des entsprechenden Teiles anpassen muß.

In vielen Montagefällen ergibt sich jedoch, daß bei einem ersten Verschrauben des Schraubteiles mit dem das Innengewinde aufweisenden Teil nachträglich eine Korrektur erforderlich ist. Beispielsweise könnte eines der Teile einen Betätigungshahn oder dergleichen aufweisen, der in seiner Gebrauchsstellung eine vorgegebene Position einnehmen soll. Werden die Gewindegänge jedoch bis zum Anschlag geschraubt, könnte ein solcher Hahn relativ zu seiner Fortsetzung schräg angeordnet sein.

Falls sich dies bei der Montage ergibt und die Gewindeverbindung soweit zurückgeschraubt wird, daß die beiden Teile eine gewünschte vorgegebene Position ihrer Umfänge und daran angeordneten Betätigungsteilen oder Anschlüssen haben, wird eine zwischen dem Teil und dem Schraubteil befindliche Dichtungshülse wieder gelockert und verliert aufgrund der vorhergehenden Verformung insbesondere dann ihre Dichtwirkung zumindest teilweise, wenn sie in Ausgangsstellung in Einschraubrichtung konisch sich verjüngend ausgebildet ist, um den Einschraubvorgang zu erleichtern. Aber auch eine sich nicht verjüngende Dichtungshülse wird durch eine solche Rückschraubbewegung gelockert und kann dann nicht mehr einem so hohen Dichtungsdruck standhalten, wie eine nur einmal angezogene und nicht mehr gelockerte Dichtung.

Der Erfindung liegt die Aufgabe zugrunde, eine Gewindeverbindung der eingangs erwähnten Art mit einer Dichtungshülse zu schaffen, bei der ein Zurückdrehen entgegen der Einschraubrichtung nicht zu einer Verschlechterung der Dichtung führt. Gegebenenfalls soll sogar eine Verbesserung der Dichtwirkung erreichbar sein.

Die überraschende Lösung dieser bisher nicht bekannten Aufgabe besteht darin, daß wenigstens ein Abschnitt der in Gebrauchsstellung im Bereich der Dichtung befindlichen Außenseite des Schraubteiles einen in Einschraubrichtung zunehmenden Querschnitt oder Durchmesser hat, so daß der in Einschraubrichtung vordere Bereich einen größeren Querschnitt oder Durchmesser als der beim Einschrauben nachfolgende Bereich hat.

Durch diese Ausgestaltung wird erreicht, daß ein Rückdrehen des Einschraubteiles aus seiner zuvor eingenommenen eingeschraubten Position oder ein entsprechendes entgegengesetztes Verdrehen des das Innengewinde aufweisenden Teiles dazu führt, daß die Dichtung nicht gelockert, sondern dicht bleibt. Durch die Querschnitts- oder Durchmesseränderung wird nämlich bei einer solchen der Einschraubbewegung entgegengesetzte Schraubbewegung bewirkt, daß nun ein Bereich größeren Querschnittes oder Durchmessers relativ zu der Dichtung verstellt wird und in dieser den Druck zumindest aufrecht erhält, evtl. sogar vergrößert, was von der Steigung der Querschnitts- oder Durchmesseränderung abhängt. Es kann also die Lockerung der Dichtung bei einem solchen Zurückdrehen der Gewindeverbindung kompensiert oder sogar umgekehrt werden. In überraschender Weise wird also bei der erfindungsgemäßen Gewindeverbindung erreicht, daß diese nach dem Anziehen des Gewindes wieder zurückgedreht werden kann, ohne daß die Dichtung dadurch verschlechtert wird. Unter Umständen wird sie sogar verbessert, so daß ein Benutzer zunächst diese Gewindeverbindung vollständig anziehen und dann durch Rückdrehen die miteinander verbundenen Teile in die gewünschte Relation ihrer Umfänge verdrehen kann, wodurch die Dichtungswirkung nicht verschlechtert, sondern sogar verbessert wird.

Die Durchmesservergrößerung kann stetig, stufenweise, schräg, konkav oder konvex gekrümmt verlaufen. Denkbar wäre beispielsweise nur stetig verlaufende Durchmesservergrößerung. Es könnte aber auch am einen Ende eine konkav gekrümmte und am anderen Ende eine konvex gekrümmte Durchmesservergrößerung angeordnet sein. Ferner könnte die gesamte Durchmesservergrößerung in axialer Richtung gesehen konkav gekrümmt oder konvex gekrümmt verlaufen. Durch solche Formgebungen kann von vorneherein vorgegeben werden, wie stark und mit welchem Gradienten die Dichtwirung beim Zurückdrehen gleichgehalten oder vor allem gesteigert wird, obwohl die Dichtung zunächst durch den Einschraubvorgang schon beansprucht und evtl. verformt wurde.

Besonders günstig ist es, wenn sich der schräg oder gekrümmt erweiternde Bereich des Schraubteiles zumindest teilweise in der in Einschraubrichtung vorderen Hälfte dieses Schraubteiles befindet. Dadurch wird sichergestellt, daß ein weiterer größerer Teil des Schraubteiles in der ersten Einschraubrichtung gesehen hinter diesem Dichtungsbereich liegt, so daß ein Zurückdrehen nicht dazu führen kann, daß der Dichtungsbereich ganz oder teilweise aus dem das Innengewinde aufweisenden Teil austritt.

Die Dichtung kann zumindest in der verpreßten Gebrauchsstellung eine in Richtung der Durchmesserzunahme abnehmende Wanddicke haben. Dadurch kann erreicht werden, daß ein Schraubteil mit Dichtung an der Außenseite eine etwa stetige Form oder sogar eine in Einschraubrichtung abnehmende Form hat, die das Einschrauben erleichtert, während aber dennoch bei einem Rückdrehvorgang die zurückbleibende Dichtung die Durchmesserzunahme des Schraubteiles mehr und mehr verpreßt wird.

Dabei bleibt die Dichtung bei einem solchen der Einschraubrichtung entgegengesetzten Zurückdrehen schon deshalb in dem Innengewinde zurück, weil dieses einen größeren Umfang, also eine größere Fläche hat und somit die Reibkraft zwischen Innengewinde und Dichtungshülse größer als zwischen Schraubteil und Dichtungshülse ist.

An dem Schraubteil kann ein Mitnehmer oder Anschlag für die Dichtung vorgesehen sein, der diese Dichtung beim Einschrauben beaufschlagt und in Einschraubrichtung mitnimmt. Dies ist vor allem dann zweckmäßig, wenn aufgrund der geometrischen Verhältnisse die Dichtung beim Einschrauben des Schraubteiles evtl. zurückbleiben könnte. Allerdings sind auch andere Maßnahmen möglich, um die Dichtung beim Einschrauben in ihre Dichtungsposition zu bringen, in der sie dann verbleibt, wenn der Schraubteil wieder etwas zurückgedreht wird. Denkbar wäre z.B. eine solche Aufrauhung des Gewindes des Schraubteiles, die vor allem beim Einschrauben wirksam wird, beim Zurückdrehen aber gegenüber der Dichtungshülse einen geringeren Widerstand findet.

Der Mitnehmer oder Anschlag kann bei der der Einschraubbewegung entgegengesetzten Drehung von der Dichtung wegbewegbar sein. Dies kann selbsttätig dadurch geschehen, daß die Dichtungshülse nach dem ersten Einschrauben in dem Innengewinde so festgehalten wird, daß sie einer entgegengesetzten Drehung nicht folgt. Durch die entgegengesetzte Drehung wird dann der Anschlag von selbst von der Dichtungshülse wegbewegt. Auch ein Mitnehmer kann durch die entgegengesetzte Drehbewegung außer Eingriff oder außer Wirkung gelangen.

Der Bereich zunehmenden Durchmessers kann zweckmäßigerweise zumindest über einen Teil der axialen Erstreckung eine Profilierung, insbesondere eine Gewindeprofilierung aufweisen. Dies verbessert die Dichtwirkung und bewirkt beim Zurückdrehen mit größerer Sicherheit eine Verpressung der gegenüber der Rückdrehung zurückbleibenden Dichtungshülse.

Im Bereich des kleinsten Durchmessers des sich vergrößernden Bereiches kann ein Bund, eine Planfläche oder dergleichen angeordnet sein, die sich radial maximal bis zu dem Außengewinde erstrecken kann und einen Anschlag für die Dichtungshülse bildet. Dies stellt eine besonders zweckmäßige Anordnung für einen Anschlag dar, der beim Einschrauben die Dichtung mitnimmt, beim Zurückdrehen sich dann aber von der zurückbleibenden Dichtung axial entfernt, so daß diese von dem sich vergrößernden Bereich verpreßt werden kann.

Die im Bereich des kleinsten Durchmessers des Bereiches zunehmenden Querschnittes angeordnete Planfläche oder dergleichen kann eine Profilierung, beispielsweise eine Rändelung oder dergleichen als Mitnehmer für die Dichtung in Drehrichtung beziehungsweise als Verdrehschutz gegenüber dem Schraubteil aufweisen. Dadurch wird mit noch größerer Sicherheit erreicht, daß die Dichtungshülse beim Einschrauben mitgenommen und mitverdreht wird, sich also in das Innengewinde einschrauben läßt. Bei einer entgegengesetzten Drehung entfernt sich jedoch die Planfläche oder dergleichen sofort von der Dichtungshülse, so daß die erwähnte Profilierung oder Rändelung außer Eingriff gelangt und die Dichtungshülse nicht mitgenommen wird.

Die vom kleinsten Durchmesser des Bereiches zunehmenden Querschnittes ausgehende Planfläche kann in radialer Richtung in einen schrägen oder gekrümmten Bereich übergehen, der insbesondere eine Gewindeprofilierung aufweist. Diese Gewindeprofilierung kann entweder ebenfalls im Eingriff mit der Dichtungshülse sein und beim Einschrauben eine geiwsse Verpressung erzielen oder sie kann vor allem zu einem Außengewindebereich überleiten, der unmittelbar mit dem Innengewinde zusammenwirkt und die Verschraubungskräfte erhöhen kann.

Eine abgewandelte Ausführungsform kann darin bestehen, daß vom kleinsten Durchmesser des Bereiches zunehmenden Querschnittes nach der entgegengesetzten Richtung und entgegen der Einschraubrichtung ein gegenläufiger Konus oder gekrümmter Bereich angeordnet ist, welcher zumindest teilweise eine Profilierung, z.B. eine Rändelung oder ein Gewindeprofil aufweist. Der sich erweiternde Bereich kann beim Einschrauben als Mitnehmer für die Dichtung wirken und auch eine Verpressung der Dichtung nur bei einer Einschraubbewegung erzeugen. Muß jedoch eine entgegengesetzte Drehung durchgeführt werden, kommt der Bereich zunehmenden Querschnittes in der schon vorbeschriebenen erfindungsgemäßen Weise zur Wirkung und weitet oder verpreßt die ihm gegenüber zurückbleibende Dichtung.

Um eine sichere und wirkungsvolle Verschraubung gleich von der ersten Einschraubdrehung an zu ermöglichen, kann das Schraubteil vor dem in Einschraubrichtung zunehmenden schrägen oder gekrümmten Bereich ein Gewindeprofil mit Normmaßen oder mit kleinerem Durchmesser aufweisen. Dieser Teil des Schraubteiles kann dann gewissermaßen als Zuggewinde beim Einschrauben dienen und den schrägen oder gekrümmten Bereich des Gewindes mit der Dichtungshülse hinter sich herziehen.

Die Dichtung kann an ihrer Innenseite zumindest bereichsweise eine in axialer Richtung wirksame Profilierung aufweisen. Beispielsweise kann die Innenprofilierung der Dichtung ein Steigungprofil ähnlich einem Gewindeprofil oder ein Innengewinde sein. Dies erlaubt die gegenseitige Verschraubung der die Gewindeverbindung bildenden Teile.

Die Außenseite der Dichtung kann zumindest bereichsweise ein Außengewinde aufweisen, welches einen zylindrischen und/oder konischen Verlauf hat. Somit kann auch das Einschrauben der Gewindehülse in das Innengewinde vorherbestimmt und beeinflußt werden. Ein normales zylindrisches Gewinde bewirkt dabei, daß die Dichtungshülse während des Einschraubvorganges zunächst praktisch das Außengewinde des die Dichtungshüle tragenden Schraubteiles bildet oder fortsetzt. Durch einen bereichsweise konischen Verlauf kann dabei das Einschrauben evtl. zunächst erleichtert werden, im weiteren Einschraubvorgang aber zu einer evtl. erwünschten stärkeren Verpressung der Dichtungshülse führen.

Das Außengewinde der Dichtung kann zumindest bereichsweise gegenüber dem Innengewinde des Teiles ein Übermaß haben. Dadurch kann berücksichtigt werden, daß die Dichtungshülse aus einem nachgiebigen Dichtungswerkstoff besteht, während das Teil mit dem Innengewinde und das Schraubteil in der Regel Metallteile und/oder Teile aus hartem Kunststoff sind. Das Übermaß kann eine elastische Zusammenpressbarkeit der Dichtung kompensieren oder sogar überkompensieren, wenn eine entsprechende Verpressung angestrebt wird.

Die Dichtung kann je nach angestrebtem Zweck unterschiedlich gestaltet sein. Es ist also möglich, daß die Dichtung in axialer Richtung an ihrem vorderen und/oder hinteren Bereich zylindrische und/oder konische Bereiche ohne vorgeformte Gewindegänge hat, die an der Innenseite und/oder an der Außenseite der Dichtung vorgesehen sind und in eingeschraubter Gebrauchsstellung zwischen dem Teil mit Innengewinde und dem Schraubteil als Gegenstück verpreßt sind. Solche keine vorgeformten Gewindegänge aufweisenden Bereiche können beim Einschrauben in die Gewindegänge gedrückt werden und dadurch eine entsprechend hohe Dichtungskraft erzeugen. Dabei kann der erfindungsgemäß in Einschraubrichtung zunehmende Querschnitt des Schraubteiles dazu beitragen, daß vor allem bei einem der Einschraubrichtung entgegengesetzten Zurückdrehen eine sichere Verpressung der Dichtungshülse erfolgt, die aufgrund fehlender Gewindegänge einer solchen Rückdrehbewegung nicht folgen kann.

Eine zweckmäßige Ausgestaltung der Erfindung kann darin bestehen, daß die Dichtung an ihrem stirnseitigen, in Einschraubrichtung vorderen Ende eine Bohrungsverkleinerung aufweist, welche als Anschlag oder Haltekralle dient. Einer solchen Bohrungsverkleinerung, die als nach innen gerichteter Bund oder gar als über den gesamten Querschnitt reichender Boden ausgebildet sein kann, findet der Schraubteil einen Anschlag an der Dichtung während des Einschraubvorganges. Beim Zurückdrehen kann hingegen dann der Schraubteil etwas von dieser Bohrungsverkleinerung zurückweichen, weil die Dichtung zurückbleibt, so daß die gewünschte Verpressung bei der Rückdrehbewegung erfolgt. Eine solche stirnseitige Bohrungsverkleinerung kann einen an dem Schraubteil vorgesehenen Anschlag oder dergleichen zum Mitnehmen der Dichtung ersetzen oder unterstützen. Die Dichtung kann an der in Einschraubrichtung entgegengesetzt angeordneten Stirnseite eine zum Schraubteil passende Profilierung, z.B. eine Rändel-Profilierung aufweisen, was wiederum die Mitnahme beim Einschrauben verbessert.

Eine besonders zweckmäßige Ausführungsform der Erfindung kann darin bestehen, daß der mit einem zylindrischen oder konischen Außengewinde versehene Bereich des Schraubteiles durch eine Ringnut unterbrochen ist, deren Nutengrund in Einschraubrichtung schräg ansteigt, so daß innerhalb der Nut ein Bereich eines in Schraubrichtung einen zunehmenden Durchmesser aufweisenden Konus gebildet ist. Der Bereich mit in Einschraubrichtung zunehmendem Querschnitt befindet sich in diesem Fall also innerhalb der erwähnten Nut, die die Dichtungshülse in Form eines Dichtungsringes in sich aufnimmt. Dabei kann die Dichtungshülse, wie schon bei den vorbeschriebenen Merkmalen und Maßnahmen erwähnt, an ihrer Außenseite glatt oder profiliert und ihrerseits zylindrisch oder konisch ausgebildet sein. Eine Rückdrehbewegung führt dann wiederum durch die zurückbleibende ringartige Dichtungshülse dazu, daß der Nutengrund aufgrund seiner konischen Gestaltung diesen Dichtungsring oder diese Dichtungshülse radial beaufschlagt und an dem Innengewinde verpreßt.

Eine abgewandelte oder zusätzliche Möglichkeit besteht bei der erfindungsgemäßen Gewindeverbindung darin, daß das Schraubteil an seiner Stirnseite einen sich entgegen der Einschraubrichtung verjüngenden Bereich oder Ansatz aufweist, der in Gebrauchsstellung mit seinem Bereich kleineren Durchmessers an der Innenseite eines dazu passenden Halteansatzes oder Wulstes der Dichtung anliegt und in axialer Richtung eine größere Abmessung oder Breite als dieser Halteansatz hat, so daß die Dichtung durch eine axiale Relativverstellung zwischen Ansatz und Wulst beim teilweisen Rückdrehen des Schraubteiles aus dem Innengewinde heraus zumindest im Bereich des Wulstes aufweitbar ist. Der Bereich mit in Einschraubrichtung zunehmendem Querschnitt oder Durchmesser kann also auch an der Stirnseite in Einschraubrichtung vor dem eigentlichen Schraubteil angeordnet sein.

Dabei kann der sich verjüngende Ansatz eine unprofilierte, im wesentlichen glatte Oberfläche haben, da er dem Gewindebereich gewissermaßen vorgeschaltet ist. Für manche Anwendungsfälle kann ein solcher in Schraubrichtung vor dem eigentlichen Gewindebereich angeordneter, sich in Einschraubrichtung erweiternder beziehungsweise entgegen der Einschraubrichtung verjüngender Ansatz im Zusammenwirken mit einem entsprechenden Dichtungswulst die Dichtungshülse beim Zurückschrauben aufweiten und somit an einem Zurückdrehen hindern und gleichzeitig die Dichtungswirkung verstärken.

Die Innenseite oder Innenöffnung des mit einem sich in Einschraubrichtung erweiternden Bereiches oder Ansatzes des Schraubteiles zusammenwirkenden Wulstes oder Bereiches der Dichtung kann so geformt sein, daß die Außenform des Schraubteiles und die Innenform der Dichtung über ihren axialen Berührbereich aneinanderliegen. Dies verbessert die Aufweitung oder Verpressung der Dichtungshülse im Bereich des Wulstes und die innenseitige Abstützung der Dichtung an dem Ansatz über die Breite des Dichtungswulstes. Somit wird der beim Zurückdrehen wirksam werdende Bereich verstärkter Verpressung praktisch über die gesamte axiale Erstreckung des Wulstes wirksam gemacht.

Bei den verschiedenen vorbeschriebenen Ausführungsarten der erfindungsgemäßen Gewindeverbindung kann in Einschraubrichtung vor und/oder hinter dem sich erweiternden Bereich, der glatt oder mit einer Außengewindeprofilierung versehen sein kann, ein mit dem Innengewinde des Teiles zusammenpassendes zylindrisches oder konisches Zuggewinde und/oder Haltegewinde vorgesehen sein, das von der Dichtung ganz oder teilweise freigelassen ist. Dieses Zuggewinde und/oder Haltegewinde sorgt für eine sichere und feste Gewindeverbindung beim Einschrauben oder auch beim Zurückschrauben. Somit können die zum Verpressen der Dichtung erforderlichen Kräfte beim Verschrauben oder beim Zurückdrehen mit entsprechend großer Sicherheit an unmittelbar miteinander zusammenwirkenden Gewindegängen erzeugt werden. Das Zuggewinde wird also von der Dichtung ganz oder teilweise freigelassen.

Um die Montage der Dichtung zu erleichtern, kann die Dichtung zur Anpassung oder Erzeugung ihrer Innenprofilierung an die Außenprofilierung des Schraubteiles auf dieses aufgeschraubt oder nach Aufweitung durch elastische Rückstellkräfte spätestens bei ihrer Verpressung angedrückt oder aufgespritzt sein. Es sind Dichtungswerkstoffe bekannt, die durch Spritzen in eine vorgegebene Form gebracht werden können. Ein unmittelbares Aufspritzen auf das Schraubteil sorgt für die formschlüssige Anpassung der Innenseite der Dichtungshülse an die Außenseite des Schraubteiles.

Es sei noch erwähnt, daß zumindest der die Dichtung aufnehmende Bereich des Schraubteiles geglättet und damit relativ zu der Dichtung beim Zurückschrauben entgegen der Einschraubrichtung leichter bewegbar oder drehbar als die Dichtung gegenüber dem Innengewinde sein kann. Eine solche Glättung vermindert also den Reibungskoeffizienten zwischen Dichtung und Schraubteil gegenüber Dichtung und Innengewinde, so daß das Zurückbleiben der Dichtung beim Zurückschrauben des Schraubteiles mit noch größerer Sicherheit erreicht wird, als wenn nur die größere Fläche an der Außenseite der Dichtung dies bewirkt. Bei gleichen Reibungskoeffizienten kann jedoch aufgrund der größeren Beaufschlagungsfläche an der Außenseite die Dichtung bei einer Rückschraubbewegung in der zuvor eingenommenen Position verbleiben, was schon nach einer geringfügigen Rückschraubbewegung außerdem durch die dann einsetzende Verpressung noch verstärkt und unterstützt wird. Es erfolgt dann eine selbsttätige Verklemmung der Dichtung in ihrer Dichtungsposition und die beim Zurückdrehen erwünschte Aufrechterhaltung oder gar Verstärkung der Dichtwirkung.

Weitere Ausgestaltungen insbesondere bezüglich der Gewinde von Dichtung, Schraubteil und Innengewinde sind Gegenstand der Ansprüche 27 und 28. Anspruch 29 betrifft eine vorteilhafte Ausgestaltung der Dichtung, die einen Bund als Anschlag zwischen Schraubteil und dem das Innengewinde aufweisenden Teil haben kann, so daß eine zusätzliche Verpressung und Verbesserung der Dichtwirkung möglich ist.

Vor allem bei Kombination einzelner oder mehrerer der vorbeschriebenen Merkmale und Maßnahmen ergibt sich also eine Gewindeverbindung, bei welcher das Schraubteil durch die erfindungsgemäße spezielle Formgebung dafür sorgt, daß die auf oder an diesem angebrachte Dichtung während des Zubeziehungsweise Aufschraubvorganges und in verschraubtem Zustand die Verbindung dauerhaft dichthalten kann. Ein ganz wesentlicher Vorteil gegenüber bisher bekannten Dichtungsanordnungen liegt dabei darin, daß ein Zurückdrehen des Schraubteiles möglich ist und dabei die Gewindeverbindung dennoch dicht bleibt oder sogar verstärkt wird, da sich die Dichtung in einem solchen Bereich des Schraubteiles befindet, wo sie durch die Rückdrehbewegung zusätzlich unter Druck gesetzt werden kann. Die bereichsweise konische oder sich in ihrem Querschnitt ändernde Gestaltung und Formgebung des Schraubteiles und der dazu passenden Dichtungshülse bewirkt, daß beim Zuschrauben eine frühzeitige Dichtungswirkung auftritt und beim Rückdrehen derselben ein Undichtwerden über zumindest einen größeren Teil der Gewindeverbindung verhindert oder die Dichtungswirkung sogar noch verstärkt wird je nach dem, mit welcher Steigung sich der entsprechende Bereich in seinem Querschnitt verändert. Die vorbeschriebenen Merkmale und Maßnahmen dienen dabei gleichzeitig dazu, ein Herausdrehen der Dichtung beim Öffnen der Gewindeverbindung, also beim Rückdrehen des Schraubteiles oder einem entgegengesetzten Drehen des das Innengewinde aufweisenden Teiles zu verhindern und über einen möglichst weiten Bereich dieser Verbindung die Dichtigkeit zu gewährleisten, so daß die Gewindeverindung auch nicht unbedingt bis zum letztmöglichen Ende zusammengeschraubt werden muß und auch bei einem nachträglichen Zurückdrehen, z.B.zum Zwecke der radialen Ausrichtung einer Anschlußarmatur, dennoch dauerhaft dicht bleibt. Durch den mehrfach erwähnten, sich in Einschraubrichtung in seinem Durchmesser oder Querschnitt erweiternden oder konischen Bereich oder Ansatz des Schraubteiles wird also in scheinbar paradoxer Weise beim teilweisen Zurückdrehen die zwischen den verschraubten Teilen und der Dichtungshülse bestehende Abdichtung zumindest aufrechterhalten oder bei entsprechend starker Schrägung des sich erweiternden Bereiches sogar verstärkt.

Nachstehend sind Ausführungsbeispiele der Erfindung anhand der Zeichnung näher beschrieben.

Es zeigt in zum Teil schematisierter Darstellung:

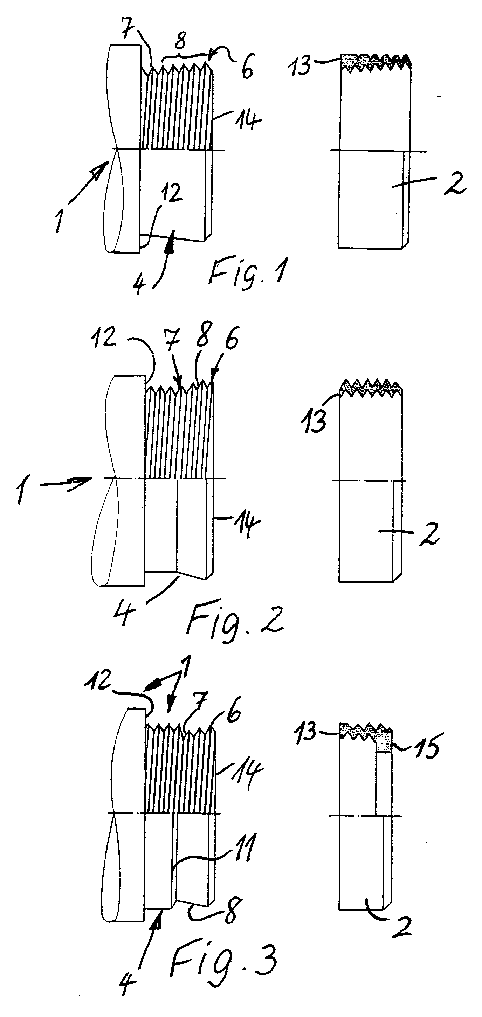

- Fig. 1: ein Stück eines Schraubteiles mit einem Gewinde, welches über den gesamten Gewindebereich in Einschraubrichtung einen zunehmenden Durchmesser hat, mit einer dazu passenden hülsenförmigen Dichtung, deren Innenprofilierung dem sich konisch vergrößernden Gewindebereich angepaßt ist, während die Außenseite der Dichtung im wesentlichen zylindrisch ist und Gewindegänge sowie einen in Einschraubrichtung hinteren, zylindrischen Bereich aufweist,
- Fig. 2: eine abgewandelte Ausführungsform, bei welcher der Gewindeteil des Schraubteiles nur im Endbereich sich konisch erweitert, also einen zunehmenden Querschnitt hat, während der in Einschraubrichtung dahinter befindliche Gewindebereich zylindrisch ausgebildet ist, mit einer über die gesamte Gewindelänge passenden hülsenförmigen oder ringförmigen Dichtung im Teillängsschnitt,
- Fig. 3: den Gewindebereich eines Schraubteiles mit einem in Einschraubrichtung vorderen, sich in Einschraubrichtung erweiternden Querschnitt und einem dazu benachbarten Bereich mit zylindrisch angeordneten Gewindegängen, wobei zwischen dem zylindrischen und dem konischen Bereich ein Absatz vorgesehen ist, mit einer dazu passenden, über den sich konisch erweiternden Gewindebereich passenden Dichtungshülse, die den Gewindebereich stirnseitig mit einem Wulst oder einer Durchmesserverkleinerung übergreift und innen konisch und außen zylindrisch ausgebildet ist,

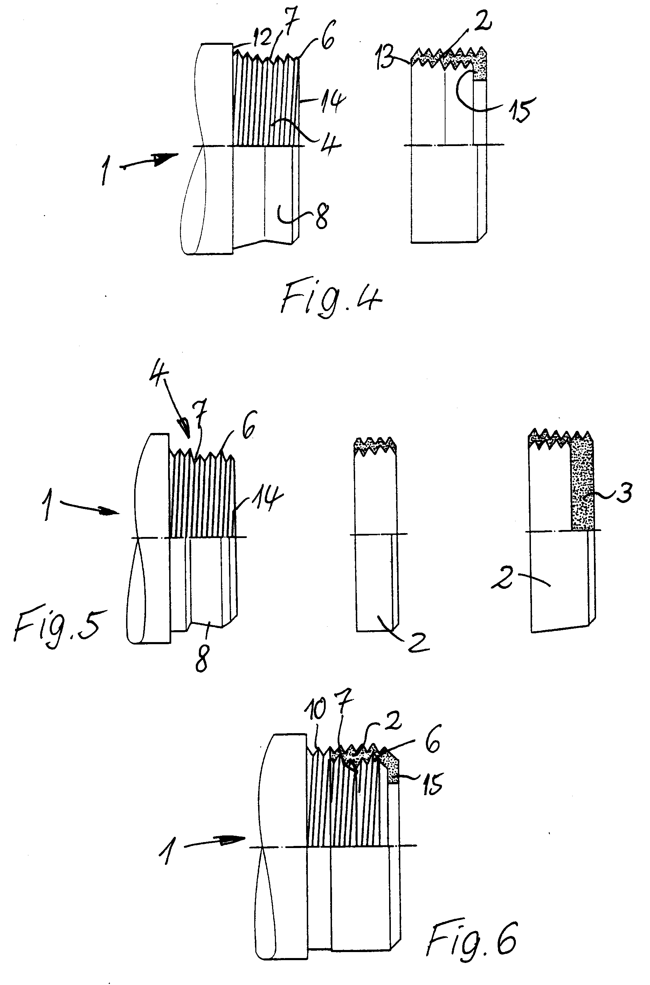

- Fig. 4: ein erfindungsgemäßes Schraubteil, dessen Gewinde zwei gegensinnig konisch sich erweiternde Bereiche aufweist, mit einer dazu passenden Dichtungshülse, die innenseitig entsprechend gegensinnig konisch und außenseitig etwa zylindrisch jeweils mit Gewindegängen versehen ist und einen die Stirnseite des Gewindebereiches übergreifenden Wulst mit einem verkleinerten Innendurchmesser hat,
- Fig. 5: ein Schraubteil mit einem zylindrischen Gewindebereich, einem in Einschraubrichtung dazu über einen Absatz benachbarten Gewindebereich, der sich in Einschraubrichtung in seinem Durchmesser stetig vergrößert und gegenüber dem größten Durchmesser wiederum eine zur Stirnseite hin abfallende konische Verjüngung des Gewindes hat mit zwei verschiedenen Dichtungen, wobei ein Dichtring nur für den sich in Einschraubrichtung konisch erweiternden Bereich und eine napfförmige Dichtung oder Dichtungshülse mit stirnseitigem Abschluß für den sich konisch erweiternden Bereich und den sich stirnseitig anschließenden Gewindeteil dargestellt sind,
- Fig. 6: ein Schraubteil, welches im Gegensatz zu den Explosionsdarstellungen gemäß den Figuren 1 bis 5 einen Schraubteil mit an zwei gegensinnig sich konisch erweiternden Gewindebereichen angebrachter Dichtung zeigt, die auch die Stirnseite mit einem radial nach innen gerichteten Wulst übergreift, wobei entgegen der Einschraubrichtung diesem mit der Dichtung versehenen Bereich benachbart noch ein Gewindebereich mit einem Außendurchmesser vorgesehen ist, der etwa dem Außendurchmesser der Dichtung entspricht,

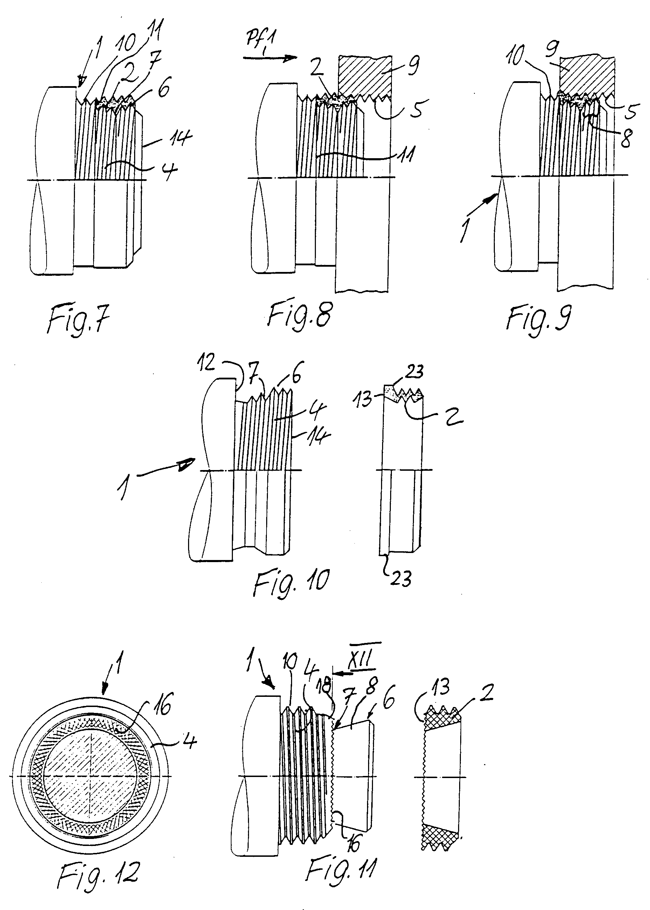

- Fig.7: eine der Fig. 6 entsprechende Darstellung, bei welcher ein Dichtring vorgesehen ist, der nur die beiden konischen Gewindebereiche des Schraubteiles umgreift und die Stirnseite freiläßt,
- Fig. 8: den Schraubteil mit Dichtring gemäß Fig. 7 nach einem ersten Eindrehen in ein Innengewinde,
- Fig. 9: den Schraubteil gemäß Fig. 7 und 8 nach einem Einschrauben bis beide konischen Bereiche und die Dichtung im Inneren des Innengewindes angeordnet sind, wonach noch ein tieferes Einschrauben und anschließend auch wieder ein Zurückdrehen möglich sind und dann der letzte zylindrische Gewindebereich unmittelbar mit dem Innengewinde zusammenwirk,
- Fig.10: eine den Fig. 1 bis 5 entsprechende Darstellung eines Gewindebereiches eines Schraubteiles, bei welchem zwei einander benachbarte, etwa zylindrische Gewindebereiche über eine stufenförmige Durchmesservergrößerung in Einschraubrichtung einander benachbart sind, mit einem Dichtring, der auf den Gewindebereich kleineren Durchmessers und dessen Übergang zu dem Gewindebereich größeren Durchmessers paßt,
- Fig. 11: einen Schraubteil, der an der Stirnseite des Gewindebereiches einen konischen Körper trägt, welcher eine glatte Oberfläche hat und sich von dem Gewindebereich in Einschraubrichtung konisch bezüglich seines Querschnittes und Durchmessers vergrößert mit einem einen zu dem Konuskörper passenden Innenkonus ausgerüsteten, auf diesen Konuskörper passenden Dichtring, wobei der Dichtring an seiner dem Gewindebereich zugewandten Stirnseite eine Profilierung oder Rändelung und die im Bereich des kleinsten Durchmessers des Konuskörpers angeordnete Anschlagfläche des Gewindebereiches eine entsprechende Rändelung oder Profilierung hat,
- Fig. 12: einen Schnitt durch den Bereich kleinsten Durchmessers des Konuskörpers mit Ansicht auf die gerändelte Anschlagfläche des Gewindebereiches des Schraubteiles gemäß dem Pfeil XII in Fig. 11,

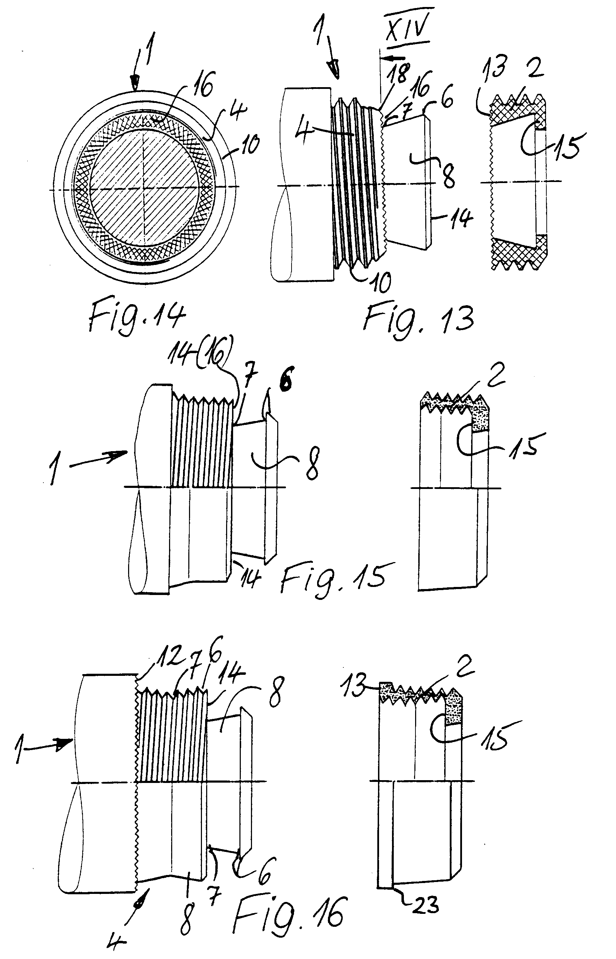

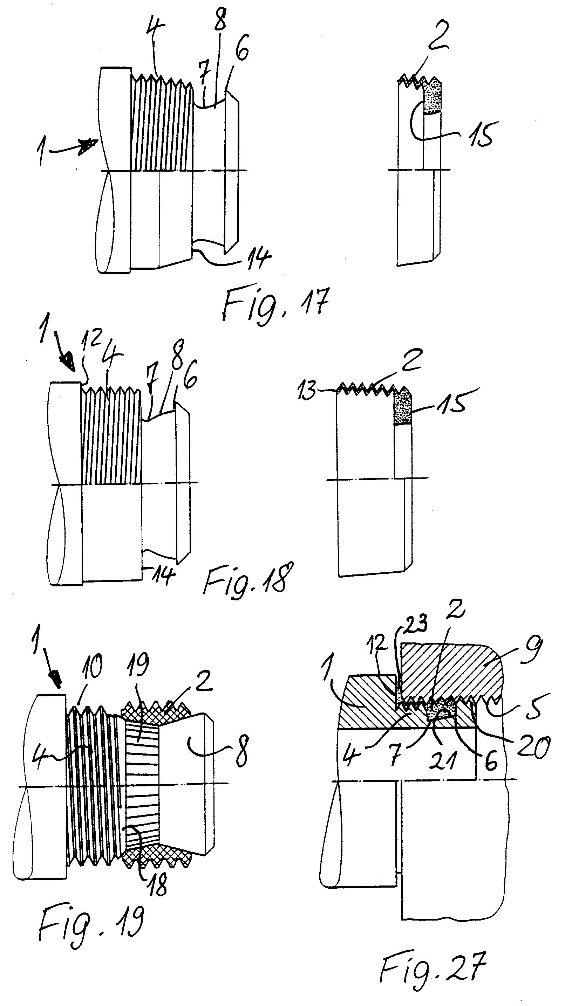

- Fig. 13: eine der Fig. 11 entsprechende Ausführungsform, bei welcher der Dichtring zusätzlich einen die Stirnseite des Konuskörpers übergreifenden Wulst hat,

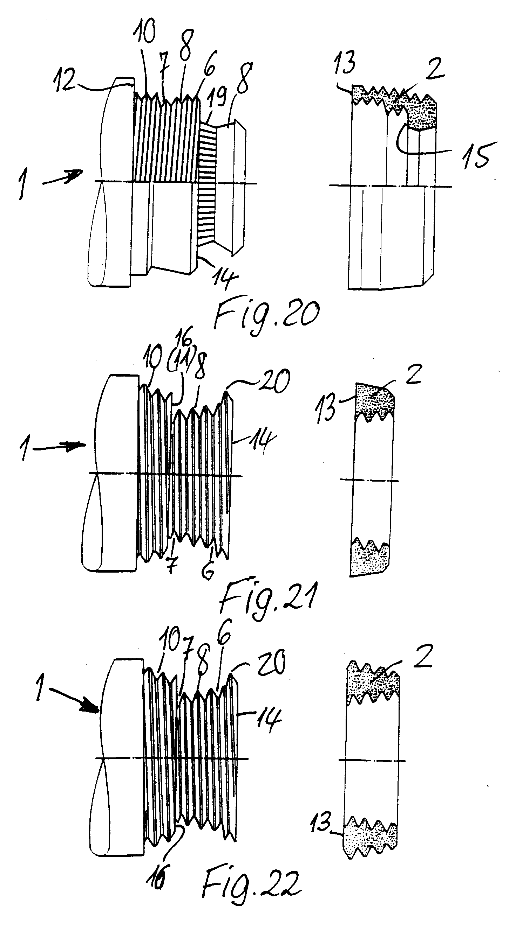

- Fig. 14: eine der Fig. 12 entsprechende Schnitt-Ansicht gemäß dem Pfeil XIV in Fig. 13,
- Fig. 15: ein Schraubteil mit einem Gewindebereich und einem stirnseitig demgegenüber vorstehenden, sich in Einschraubrichtung erweiternden Konuskörper, der seinerseits an der Stirnseite einen bundartigen Vorsprung hat, mit einer den Gewindebereich umfassenden Dichtung, die mit einem stirnseitigen Wulst bis zu dem Konuskörper reicht und mit dem Innendurchmesser des Wulstes an der Außenseite des Konuskörpers in Gebrauchsstellung anliegt,
- Fig. 16: eine der Fig. 15 entsprechende Ausführungsform, bei welcher der Gewindebereich des Schraubteiles zwei konisch gegensinnige Bereiche hat, wobei der in Schraubrichtung vordere Bereich in Einschraubrichtung einen zunehmenden Durchmesser hat und an seiner Stirnseite einen Konuskörper analog Fig. 15 trägt, wobei die zugehörige Dichtung den gesamten Gewindebereich übergreift und mit einem gerändelten Anschlag an dem dem Konuskörper abgewandten Gewindeende zusammenwirkt und mit einem stirnseitig angeordneten Wulst den Gewindebereich übergreift und an dem Konuskörper anliegt,
- Fig. 17: eine etwa der Fig. 15 entsprechende Ausführungsform, bei welcher der Konuskörper eine konkav gerundete Durchmesserzunahme hat, d.h. seine Mantellinien konkav gerundet sind und die dazu passende Dichtung an dem Wulst analog geformt ist,
- Fig. 18: eine der Fig. 17 entsprechende Ausführungsform, bei welcher die Mantellinien des konischen Ansatzes konvex gekrümmt sind und der Wulst im Anlagebereich eine entsprechende Anlagefläche aufweist,
- Fig. 19: ein Schraubteil mit einem Gewindebereich und einem stirnseitig angeordneten Konuskörper, wobei jedoch zwischen dem Gewindebereich und dem kleinsten Durchmesser des sich in Einschraubrichtung erweiternden Konuskörper ein gegensinniger Konuskörper mit Längsrändelung angeordnet ist und ein Dichtring oder eine Dichtungshülse vorgesehen ist, die beide Konusbereiche zumindest teilweise umgreift,
- Fig. 20: ein Schraubteil mit einem zweiteiligen Gewindebereich, wobei der in Einschraubrichtung vordere Gewindebereich sich in Einschraubrichtung konisch erweitert, während der Nachbarbereich ein zylindrisches Gewinde hat und über einen Absatz in den konischen Gewindebereich übergeht, wobei stirnseitig zwei gegensinnige Konuskörper entsprechend Fig. 19 vorgesehen sind und ein sich in Einschraubrichtung verjüngender Konuskörper eine Längsrändelung und der sich in Einschraubrichtung erweiternde Konuskörper einen stirnseitigen Bund haben, wobei die zugehörige Dichtung eine der Außenprofilierung des Gewindebereiches und der Konuskörper entsprechende Innenprofilierung und ein etwas konisches Außengewinde hat,

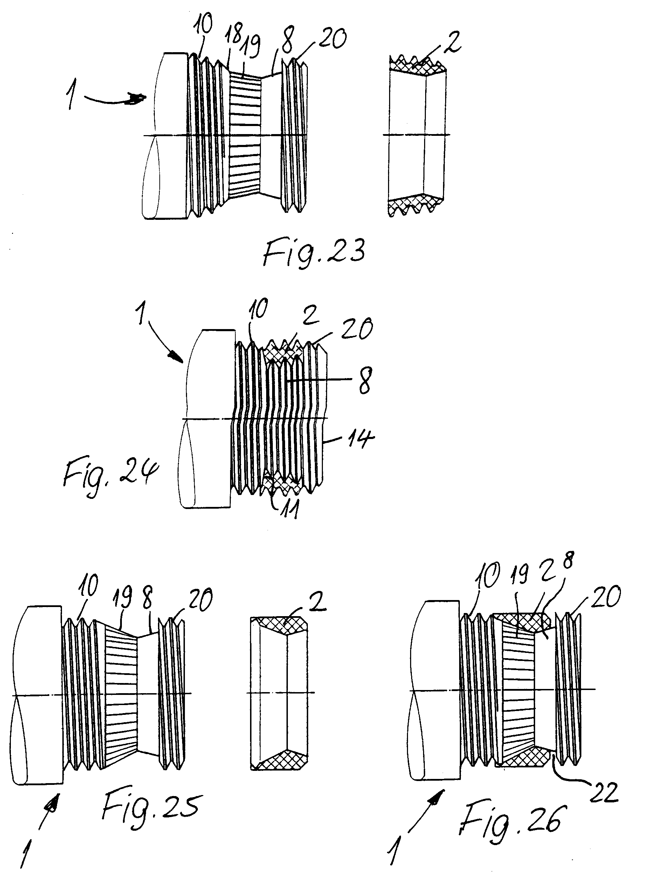

- Fig. 21: ein Teil eines Schraubteiles, bei welchem ein sich in Einschraubrichtung konisch erweiternder Gewindebereich beidseitig durch Gewindebereiche größerer Durchmesser begrenzt ist, wobei der in Einschraubrichtung vordere größere Gewindegang als Zuggewindegang vorgesehen ist, der von dem zugehörigen, innenseitig ebenfalls mit einem gegensinnig konischen Gewinde versehenen Dichtring nicht übergriffen ist, wobei dieser Dichtring außenseitig glatt und in Einschraubrichtung sich konisch verjüngend ausgebildet ist,
- Fig. 22: eine der Fig. 21 entsprechende Ausführungsform, bei welcher der Dichtring außenseitig an seiner sich konisch verjüngenden Fläche ebenfalls Gewindegänge hat und mit einem Übermaß gegenüber den größeren Gewindegängen des Schraubteiles ausgestattet ist,
- Fig. 23: Eine Ausführungsform, bei welcher in Einschraubrichtung vorne Zuggewindegänge vor einem sich in Einschraubrichtung konisch erweiternden glatten Konuskörper angeordnet sind, welchem Konuskörper entgegen der Einschraubrichtung ein weiterer Konus mit Längsrändelung und diesem wiederum ein Gewindebereich benachbart sind und der zugehörige Dichtring auf die beiden gewindefreien Konusbereiche paßt und außenseitig mit einem Außengewinde versehen ist,
- Fig. 24: ein Ausführungsbeispiel, bei welchem in Einschraubrichtung am vordersten Ende des Gewindes Zuggewindegänge, diesen benachbart ein sich in Einschraubrichtung konisch erweiternder Gewindebereich und diesem sich konisch erweiternden Gewindebereich wiederum benachbart ein Schlußgewinde mit etwa der Größe des Zuggewindes angeordnet sind und ein Dichtring den Bereich der sich konisch in Einschraubrichtung erweiternden Gewindegänge zwischen den größeren Gewindegängen ausfüllt und diese mit einem Außengewinde gegebenenfalls mit etwas Übermaß fortsetzt,
- Fig. 25: eine etwa Fig. 23 entsprechende Ausführungsform, wobei jedoch der noch nicht montierte Dichtring außenseitig glatt ist, und
- Fig. 26: die Ausführungsform gemäß Fig. 25 in montiertem Zustand, wobei der Dichtring auf dem glatten, sich in Einschraubrichtung konisch erweiternden Bereich nur einen Teil überdeckt und einen Ausweichspalt gegenüber den vorderen Zuggewindegängen frei läßt sowie
- Fig. 27: ein Ausführungsbeispiel, bei welchem im Verlauf des Gewindes des Schraubteiles eine Ringnut angeordnet ist, deren Boden als sich in Einschraubrichtung erweiternder Konuskörper gestaltet ist und die von einem Dichtring ausgefüllt ist, der sich noch über Nachbargewindegänge entgegen der Einschraubrichtung bis zu einem Anschlag fortsetzt.

Bei der nachfolgenden Beschreibung der einzelnen Ausführungsbeispiele werden übereinstimmende Teile oder Bereiche auch bei unterschiedlicher Formgebung, jedoch übereinstimmender Funktion weitgehend mit übereinstimmenden Bezugszahlen versehen. Dabei erhalten solche Teile oder Bereiche diese Bezugszahlen auch in denjenigen Zeichnungen, bei deren Beschreibung sie evtl. nicht ausdrücklich erneut erwähnt sind, so daß die entsprechenden Beschreibungen anderer Ausführungsbeispiele auch für solche Ausführungsbeispiele gelten.

Zum Herstellen einer dichten Gewindeverbindung, wie sie beispielsweise in Fig. 9 oder 27 dargestellt ist, ist vor allem ein im ganzen mit 1 bezeichnetes Schraubteil mit einer sich zumindest über einen Teil der axialen Länge verlaufenden ring- oder hülsenförmigen Dichtung 2 vorgesehen, die gemäß Fig. 5 aber auch napfförmig gestaltet sein kann, indem die Hülsenform durch einen Boden 3 stirnseitig abgeschlossen ist. Dabei erkennt man in allen Figuren von dem Schraubteil 1 nur ein Endstück und vor allem sein mit einem Außengewinde versehenes Endstück 4. Damit kann es in ein Innengewinde 5 eingeschraubt werden, wie es in den schon erwähnten Figuren 9 und 27 angedeutet ist und bei den übrigen Figuren nicht näher dargestellt ist. Dabei spielt es keine Rolle, wie dieses das Innengewinde 5 aufweisende Teil im einzelnen gestaltet ist. Man erkennt jedoch, daß sich so eine dichte Gewindeverbindung herstellen läßt, weil nämlich das einschraubbare Schraubteil 1 mit seiner Dichtung 2 in dieses Innengewinde 5 eingeschraubt wird, wobei die Dichtung 2 aus verformbarem Werkstoff besteht.

Bei allen Ausführungsbeispielen ist vorgesehen, daß die Außenseite des Schraubteiles 1 und zwar an dem Endstück 4 zumindest im Bereich der Dichtung 2 einen in der durch den Pfeil Pf1 in Fig. 8 angedeuteten Einschraubrichtung zunehmenden Querschnitt oder Durchmesser hat, so daß der in Einschraubrichtung vordere Bereich 6 einen größeren Querschnitt oder Durchmesser als der beim Einschrauben nachfolgende Bereich 7 hat.

Gemäß Fig. 1 kann beispielsweise das gesamte mit dem Außengewinde versehene Endstück 4 diese Form haben, während bei weiteren Ausführungsbeispielen, wie schon aus der Figurenaufzählung entnehmbar, nur Teile des Endstückes 4 diese besondere Form haben können. Dabei ist in Fig. 1 ein über diesen Bereich verlaufendes Außengewinde vorgesehen, jedoch sind auch Ausführungsbeispiele mit einem glatten, sich in Einschraubrichtung vergrößernden Bereich vorgesehen, wie es beispielsweise Fig. 11, 13, 15, 16, 17, 18, 19, 20 und 23 sowie auch 25 und 26 und ferner auch Fig. 27 zeigen.

Dabei kann diese Durchmesservergrößerung zwischen dem im Querschnitt kleineren Bereich 7 und dem in Einschraubrichtung vorderen größeren Bereich 6 stetig, stufenweise, schräg, konkav oder konvex gekrümmt verlaufen. Ein Beispiel für einen stetigen Verlauf gibt Fig. 1 oder auch mehrere der weiteren Beispiele, wie auch Fig. 11, während ein stufenförmiger Verlauf in Fig. 10 dargestellt ist. Ein Beispiel für einen konkav gekrümmten Verlauf der Durchmesservergrößerung zeigt Fig. 17, ein Beispiel für einen konvex gekrümmten Verlauf Fig. 18.

Diese Anordnungen könnten aber auch wechselweise oder wahlweise bei anderen Ausführungsbeispielen vorgesehen sein. Beispielsweise könnte der stetige Verlauf der außenseitig glatten Durchmesservergrößerung gemäß Fig. 19 auch konvex oder konkav gekrümmt oder mit Stufungen versehen sein, wobei diese Stufungen ihrerseits wiederum schräg oder schuppenartig angeordnet sein könnten.

Bei mehreren Ausführungsbeispielen befindet sich dabei der schräg oder gekrümmt erweiternde Bereich zwischen kleinstem Durchmesser 7 und größtem Durchmesser 6, im folgenden insgesamt als Bereich 8 bezeichnet, in der in Einschraubrichtung vorderen Hälfte des Endstückes 4 beziehungweise des Schraubteiles 1, wenn man den mit Gewinde versehenen Teil als Schraubteil bezeichnet.

Man erkennt dies beispielsweise bei den Ausführungsbeispielen nach Fig. 2 bis 9 und auch bei denjenigen Ausführungsbeispielen, bei denen der sich erweiternde Bereich 8 kein Gewinde hat, sondern dem Endstück 4 in Einschraubrichtung benachbart ist und eine glatte Oberfläche hat, wie es beispielsweise Fig. 11 bis 20 zeigen.

Beispielsweise an Fig. 1, aber auch an weiteren Figuren, z.B. den Figuren 8 und 9, wird deutlich, daß die Dichtung 2 zumindest in der verpreßten Gebrauchsstellung eine in Richtung der Durchmesserzunahme abnehmende Wanddicke hat. Somit gleicht die Dichtung 2 außenseitig die Durchmesseränderung des Bereiches 8 aus.

Wird gemäß den Figuren 7 bis 9 ein derartig gestaltetes Schraubteil 1 in das Innengewinde 5 eines Gegenstückes 9 eingeschraubt und somit eine Gewindeverbindung oder Schraubverbindung hergestellt, wird die Dichtung 2 zwischen Schraubteil 1 und Gegenstück 9 im Gewindebereich verpreßt. Dabei kann die Verschraubung aus der Position in Fig. 9 noch um weitere Gewindegänge 10 fortgesetzt werden.

Falls die erreichte Endstellung eine Postion der verschraubten Teile zueinander ergibt, die unerwünscht ist, kann ein Zurückdrehen durchgeführt werden, wodurch die Dichtung 2 aufgrund des sich erweiternden Bereiches 8 zusätzlich verpreßt wird. Im Gegensatz zu gleichförmigen Verbindungen mit dazwischen befindlicher Dichtung ergibt sich also beim Zurückdrehen eine Beibehaltung oder in aller Regel sogar eine Verbesserung der Dichtwirkung, während herkömmliche Dichtungen durch eine solche Rückdrehbewegung gelockert werden. Der sich erweiternde Bereich 8 wird relativ zu der Dichtung axial bewegt und dehnt diese dadurch in radialer Richtung aus, was aufgrund der Nachgiebigkeit des Dichtungswerkstoffes möglich ist. Somit ergibt sich eine gegenüber der ersten Eindrehposition zumindest im Bereich der Durchmesservergrößerung verstärkte Verpressung der Dichtung 2.

In mehreren Ausführungsbeispielen ist jeweils ein Mitnehmer 11 oder Anschlag 12 für die Dichtung 2 vorgesehen, der die Dichtung 2, in der Mehrzahl der Fälle eine Dichtungshülse, beim Einschrauben beaufschlagt und in Einschraubrichtung mitnimmt. Beispielsweise erkennt man in Fig. 1 an dem in Einschraubrichtung hinteren Ende des Gewindebereiches einen Anschlag 12, an welchem die entsprechende Stirnseite 13 der Dichtung 2 in Gebrauchsstellung zur Anlage kommt. Ein ähnlicher Anschlag 12 ist in Fig. 2 erkennbar.

In Fig. 3 bildet die in Einschraubrichtung vordere Stirnseite 14 des Schraubteiles 1 den Anschlag oder Mitnehmer, weil die Dichtung einen dort zur Anlage kommenden Wulst 15 aufweist.

In Fig. 4 ist sowohl ein rückwärtiger Anschlag 12 als auch die Stirnseite 14 jeweils als Anschlag vorgsehen, da auch dort die als Hülse ausgebildete Dichtung einen vorderen, radial nach innen vorspringenden Wulst 15 hat.

Fig. 5 zeigt eine Ausgestaltung, bei welcher der Übergang zwischen einem zylindrischen Gewinde 10 und dem sich konisch erweiternden Bereich 8 stufenartig als Anschlag 12 ausgebildet ist. Dabei deutet Fig. 5 an, daß mit dem sich erweiternden Bereich 8 entweder eine ringförmige Dichtung 2 oder eine hülsenförmige Dichtung 2 mit einem Boden 3 zusammenwirken kann, so daß in letzterem Falle wiederum sowohl der Anschlag 12 als auch die Stirnseite 14 die Dichtung 2 beim Einschrauben mitnehmen.

Eine Kombination dieser Möglichkeiten zeigt Fig. 6, wo wiederum im Anschluß an einen Gewindebereich 10 ein Anschlag 12 vorgesehen ist und die Dichtung 2 einen die Stirnseite 14 übergreifenden Wulst 15 hat.

Fig. 10 ist wiederum ein Beispiel mit einem Anschlag 12, der mit der entsprechenden Stirnseite 13 der Dichtung 2 zusammenwirkt.

Beim Einschrauben wird also die Dichtung 2 in jedem Falle mitgenommen, kann aber bei einer Rückdrehbewegung zurückbleiben und durch den sich erweiternden Bereich 8 stärker verpreßt werden.

Weitere Ausgestaltungen von Mitnehmern 11 oder Anschlägen 12 werden im folgenden anhand weiterer Ausführungsbeispiele erläutert werden.

Zunächst sei darauf hingewiesen, daß der Bereich 8 zunehmenden Durchmessers zumindest über einen Teil seiner axialen Erstreckung eine Profilierung, insbesondere eine Gewindeprofilierung aufweisen kann, wie es von vorneherein Fig. 1 oder 2, aber auch Fig. 3 bis 9 und ferner Fig. 21, 22 und 24 zeigen.

Für mehrere Ausführungsbeispiele wurde bereits der Anschlag 12 erläutert, der gemäß Fig. 1 und weiteren Figuren im Bereich des kleinsten Durchmessers 7 des sich vergrößernden Bereiches 8 als ein Bund, eine Planfläche oder dergleichen angeordnet ist, die sich radial nach außen erstreckt. Ist das mit dem Gewinde versehene Endstück 4 unterteilt, könnte ein solcher als Planfläche ausgebildeter Bund sich auch bis zu dem eigentlichen Außengewinde erstrecken, wie es in den Ausführungsbeispielen gemäß Fig. 11 bis 18 vorgesehen ist, wo eine entsprechende, sich radial bis zu dem Gewindebereich erstreckende Planfläche 16 an der Stelle des kleinsten Durchmessers 7 des sich vergrößernden Bereiches 8 befindet.

Dabei kann diese im Bereich des kleinsten Durchmessers 7 des Bereiches 8 zunehmenden Querschnittes angeordnete Planfläche 16 eine Profilierung haben, die gemäß Fig. 11 und 12 als Rändelung ausgebildet sein kann und somit als Mitnehmer für die Dichtung 2 in Drehrichtung beim Einschrauben in Einschraubrichtung gemäß dem Pfeil Pf1 beziehungsweise als Verdrehschutz gegenüber dem Schraubteil 1 dient. Bei einem Zurückdrehen entgegen der Einschraubrichtung hingegen löst sich die Planfläche 16 von der Stirnseite 13 des Dichtringes, so daß diese Rändelung außer Eingriff gelangt und die Mitnahmefunktion aufgehoben wird, so daß die Dichtung 2 zurückbleiben und aufgeweitet werden kann.

Bei den schon erwähnten Ausführungsbeispielen gemäß Fig. 11 bis 18 und auch weiteren Ausführungsbeispielen gemäß Fig. 19 und 20 sowie 23 und 25 bis 27 ist der Bereich 8 mit zunehmendem Querschnitt an der Außenseite glatt ausgebildet, trägt also keine Gewindeprofilierung. Bei diesen Ausführungsbeispielen hat das Schraubteil 1 an seiner Stirnseite 14 den sich entgegen der Einschraubrichtung verjüngenden Bereich 8 als Ansatz, der in Gebrauchsstellung mit seinem Bereich kleineren Durchmessers 7 an der Innenseite eines dazu passenden Wulstes 15 der Dichtung 2 anliegt und in axialer Richtung eine größere Abmessung oder Breite als dieser Wulst 15 hat, so daß die Dichtung durch eine axiale Relativverstellung zwischen Ansatz und Wulst 15 beim teilweisen Rückdrehen des Schraubteiles 1 aus dem Innengewinde 5 heraus zumindest im Bereich des Wulstes 15 aufgeweitet wird, also wiederum die Dichtwirkung bei einem Zurückdrehen durch ein stärkeres Verpressen der Dichtung aufrechterhalten oder verstärkt wird. Dabei hat dieser sich verjüngende Ansatz, wie bereits erwähnt, eine unprofilierte, im wesentlichen glatte Oberfläche, die die Relativverdrehung und axiale Verstellung gegenüber dem Wulst 15 erleichtert. Dabei ist die Innenseite oder Innenöffnung des mit dem sich konisch in Einschraubrichtung erweiternden Bereich 8 oder Ansatz des Schraubteiles 1 zusammenwirkenden Wulstes 15 in gleicher Richtung wie dieser Bereich 8 konisch, so daß der Außenkonus des Schraubteiles 1 beziehungsweise seines Bereiches 8 und der Innenkonus der Dichtung 2 im Bereich ihres Wulstes 15 über ihren axialen Berührbereich aneinanderliegen. Ansatz und Wulst sind also so geformt, daß die Außenform des Schraubteiles und die Innenform der Dichtung über ihren axialen Berührbereich aneinanderliegen und somit die Aufweitung der Dichtung 2 beim ersten Zurückdrehen und gleichzeitigen Zurückbleiben der Dichtung 2 beginnt.

Die vom kleinsten Durchmesser 7 des Bereiches 8 zunehmenden Querschnittes ausgehende Planfläche 16 kann gemäß den Figuren 11 und 13 in radialer Richtung in einen schrägen, gegebenenfalls auch gekrümmten, Bereich 18 übergehen, der zunächst glatt sein kann, aber auch eine Gewindeprofilierung zur Überleitung zu dem eigentlichen Gewinde haben kann. Dadurch kann der Übergang von der Außenseite der Dichtung 2 zu dem Gewinde 10 des Schraubteiles 1 erleichtert und verbessert werden.

Bei anderen Ausführungsbeispielen, z.B. denen nach Fig. 6 bis 9 oder 19, 20, 25 und 26 kann vom kleinsten Durchmesser 7 des Bereiches 8 zunehmenden Querschnittes nach der der Einschraubrichtung entgegengesetzten Seite ein zu dem Bereich 8 gegenläufiger Konus 19 angeordnet sein, welcher zumindest teilweise ein Gewindeprofil aufweisen oder auch glatt sein kann. Somit kann auch beim Einschrauben in Einschraubrichtung eine Verpressung der Dichtung durch diesen Konus 19 erfolgen, vor allem kann aber auch dieser Konus 19 als der Mitnehmer wirken, der unter Umständen einen Anschlag 12 überflüssig macht, obwohl auch zusätzlich noch ein solcher Anschlag 12 vorgesehen sein kann. Vor dem in Einschraubrichtung zunehmenden schrägen oder gekrümmten Bereich 8 kann ein Gewindeprofil 20 mit Normmaßen oder mit kleinerm Durchmesser vorgesehen sein, wie es Fig. 5 oder Fig. 21 und 22 und besonders deutlich Fig. 23 und 24 sowie auch die Figuren 25, 26 und 27 zeigen. Dieses Gewindeprofil 20 kann beim Einschrauben als Zuggewinde wirksam werden, wie es Fig. 24 andeutet. Das Gewindeprofil 20 wirkt dabei unabhängig von der Dichtung 2 mit dem Innengewinde 5 zusammen, so daß beim Verschrauben der diesem Gewindeprofil 20 folgende Bereich, welcher die Dichtung 2 aufweist, in das Innengewinde 5 hineingezogen wird. Darüber hinaus kann dieses Gewindeprofil 20 auch bei der Rückschraubbewegung entsprechend wirksam werden und dann dazu beitragen, daß in dem sich erweiternden Bereich 8 die gegenüber der Rückschraubbewegung zurückbleibende Dichtung 2 bereichsweise radial aufgeweitet und dadurch stärker verpreßt wird.

In mehreren Ausführungsbeispielen hat die Dichtung 2 an ihrer Innenseite eine in axialer Richtung wirksame Profilierung, die dabei bevorzugt als ein Steigungsprofil ähnlich einem Gewindeprofil oder Innengewinde ist, was vor allem für diejenigen Ausführungsbeispiele zutrifft, in denen die Dichtung 2 auf einem Außengewinde des Endstückes 4 des Schraubteiles angeordnet ist. Ist der sich erweiternde Bereich 8 glatt, kann zumindest in diesem Bereich auch die Dichtung 2 innenseitig glatt sein.

Ferner erkennt man, daß die Außenseite der Dichtung zumindest bereichsweise ein Außengewinde aufweist, welches einen zylindrischen oder auch einen konischen Verlauf haben kann, um das Einschrauben zu erleichtern oder die Dichtungswirkung zu beeinflussen. Dabei kann das Außengewinde der Dichtungshülse dann in das Innengewinde 5 eingeschraubt werden und demgegenüber auch zumindest bereichsweise ein Übermaß haben, um eine gute Verpressung und Abdichtung zu erzielen.

In Fig. 1 ist noch angedeutet, daß die Dichtung 2 in axialer Richtung an ihrem hinteren Bereich zylindrisch, also ohne vorgeformte Gewindegänge ausgebildet sein kann, wobei dann aber diese Außenseite der Dichtung dennoch im Innengewinde 5 zwischen diesem und dem Gegenstück oder Endstück 4 verpreßt wird. Solche zylindrische Bereiche könnten auch am vorderen Ende und/oder an der Innenseite der Dichtung vorgesehen werden.

Es wurde schon der bei einigen Ausführungsbeispielen vorgesehene Wulst 15 der Dichtung 2 erwähnt, welcher als Anschlag oder Haltekralle beim Einschraubvorgang dienen kann, aber die Rückschraubbewegung nicht behindert, bei welcher die Dichtung 2 gegenüber dem zurückgeschraubten Schraubteil 1 im Innengewinde 5 zurückbleibt. Dieses Zurückbleiben geschieht in erster Linie dadurch, daß die Außenseite der Dichtung und das Innengewinde einen größeren Durchmesser und somit eine größere Fläche als die Innenseite der hülsen-, ring- oder napfförmigen Dichtung 2 hat, so daß an der Außenseite insgesamt eine größere Reibkraft entsteht, die beim Einschrauben durch die erwähnten Maßnahmen mit Hilfe von Anschlägen oder Mitnehmern überwunden wird, beim Zurückschrauben aber in dem erwünschten Sinne wirksam wird, daß die Dichtung gegenüber einer solchen Rückschraubbewegung zurückbleibt und durch den sich erweiternden Bereich 8 radial unter stärkeren Anpreßdruck gesetzt werden kann, soweit dieser Bereich 8 reicht.

Diese Mitnahme ist bei einer Dichtung 2 gemäß Fig. 11 oder 13 dadurch verbessert, daß an der dem Anschlag beziehungsweise der Planfläche 16 entgegengesetzt angeordneten, in Gebrauchsstellung damit zusammenwirkenden Stirnseite 13 eine zum Schraubteil 1 passende Profilierung, z.B. eine Rändelprofilierung aufweist. In Einschraubrichtung verbessert diese die Mitnahme der Dichtung 2, bei entgegengesetzter Drehbewegung trennen sich diese Profilierungen jedoch sehr schnell, so daß die Dichtung 2 zurückbleibt und aufgeweitet und verpreßt wird, was die Festlegung an der zuvor eingenommenen Postion verbessert und eine Mitnahme entgegen der Einschraubrichtung noch besser verhindert.

Fig. 27 ist ein Ausführungsbeispiel, bei welchem der mit einem Außengewinde versehene Schraubteil oder Bereich des Schraubteiles 1 durch eine Ringnut 21 unterbrochen ist, deren Nutengrund in Einschraubrichtung gemäß Fig. 27 schräg ansteigt, so daß innerhalb der Nut 21 der Bereich 8 mit in Einschraubrichtung zunehmendem Durchmesser gebildet ist. Aufgrund der auch axialen Nachgiebigkeit der Dichtung kann diese innerhalb der Nut beim Zurückschrauben sowohl axial als auch dadurch dann radial verpreßt werden. Dabei ist der Nutengrund in diesem Ausführungsbeispiel glatt.

Auch Fig. 24 könnte als eine Anordnung mit einer derartigen Nut 21 aufgefaßt werden, wobei der Nutengrund zusätzlich eine Gewindeprofilierung hat, die in der gleichen Richtung wie das Gewinde 10 und das Gewinde 20 ansteigt.

Sowohl das Gewinde 10 beispielsweise gemäß Fig. 5, 6 oder 7 bis 9 als auch das mehrfach erwähnte Gewinde 20 passen also mit dem Innengewinde 5 des Teiles 9 zusammen und wirken als Zuggewinde, je nach dem , in welcher Richtung das Schraubteil 1 relativ zu dem Teil 9 - oder umgekehrt - verdreht wird. Dabei sind diese Zuggewinde-Bereiche von der Dichtung 2 ganz oder auch teilweise freigelassen, so daß diese Bereiche eine feste Gewindeverbindung ergeben, die auch die notwendige Kraft aufbringen können, um die Dichtung zu verpressen.

In den Figuren 19, 20, 23, 25 und 26 ist dem sich konisch erweiternden, in der Regel außenseitig glatten Bereich 8 ein gegensinnig ansteigender Konus angeordnet, welcher kein Gewindeprofil, sondern eine Längsrändelung hat, so daß er ebenfalls gut als Mitnehmer für die Dichtung 2 beim Einschrauben dienen kann. Auch dieser Konus 19 löst sich bei einer Rückschraubbewegung gegenüber der zurückbleibenden Dichtung 2 sofort aus dieser, so daß wiederum der Bereich 8 die gewünschte Verpressung der Dichtung erzeugen kann, also die Rückdrehbewegung die Abdichtung aufrechterhält oder sogar verbessert. Ein Ausweichspalt (22) begünstigt diese axiale Relativbewegung zwischen Dichtung 2 und Bereich 8.

Entweder kann die Dichtung 2 aufgrund ihrer Verformbarkeit oder Elastizität über den Gewindebereich und insbesondere den sich erweiternden Bereich 8 gezogen werden, oder sie kann zur Anpassung ihrer Innenprofilierung an die Außenprofilierung des Schraubteiles 1 auf dieses aufgespritzt sein.

Es sei schließlich noch erwähnt, daß der die Dichtung 2 aufnehmende Bereich des Schraubteiles 1, sei es ein gewindeloser Bereich, sei es ein Bereich mit Profilierungen und Gewindegängen, geglättet und damit relativ zu der Dichtung beim Zurückschrauben entgegen der Einschraubrichtung leichter bewegbar als die Dichtung 2 gegenüber dem Innengewinde 5 sein kann, was wiederum die gesamte Funktion der Gewindeverbindung insbesondere bei einer Rückdrehbewegung günstig beeinflußt, weil dann das Schraubteil 1 gegenüber der Dichtung 2 zurückgedreht werden kann, diese aber von dem Innengewinde 5 nicht nur aufgrund der größeren Reibfläche, sondern auch eines größeren Reibungskoeffizienten festgehalten werden kann, so daß die erwünschte stärkere Verpressung durch den sich erweiternden Bereich 8 mit entsprechender Sicherheit erfolgt.

Vor allem in Fig. 27 erkennt man noch, daß das Innengewinde der Dichtung 2 und das dazu passende Gewindeprofil des Schraubteiles 1 zumindest in der verpreßten Endform bzw. Endstellung im Gewindeprofil und in der Gewindesteigung dem Innengewinde 5 des Teiles 9 entsprechen, das Profil aber im Durchmesser entsprechend der vorgesehenen oder gewünschten Wandungsdicke der Dichtung 2 kleiner gehalten ist. Das kleiner gehaltene Gewindeprofil des Schraubteiles 1 und der Dichtung 2 befinden sich dabei zumindest mit seinem Außendurchmesser noch im Bereich der Profiltiefe des Innengewindes 5 des Teiles 9, so daß in axialer Richtung auch die metallischen Gewindegänge einander hintergreifen und die Axialkraft nicht ausschließlich über den Dichtungswerkstoff übertragen werden muß. Diese Anordnung kann bei allen vorbeschriebenen Ausführungsbeispielen vorgesehen sein, ist aber bei solchen Lösungen nicht unbedingt erforderlich, die ein zusätzliches Zuggewinde 10 und/oder 20 haben.

In den Figuren 7, 16 und 27 erkennt man noch, daß die Außenseite der Dichtung 2 an ihrem der Einschraubrichtung entgegengesetzten Ende, also im Bereich ihrer Stirnseite 13, einen Bund 23 aufweisen kann, welcher als Anschlag zwischen der Planfläche des Teiles 9 und der Anschlagfläche 12 des Schraubteiles 1 angeordnet und verpreßbar ist. Die Verpressung ist dabei in Fig. 27 erkennbar. Durch diesen Bund 23 kann insbesondere bei solchen Fällen, in denen im Anschluß an die Dichtung noch weitere Gewindegänge folgen, eine zu weite Mitnahme der Dichtung 2 in das Innengewinde 5 verhindert werden. Außerdem kann die Dichtwirkung durch den verpreßten Bund weiter verbessert werden.

Die Gewindeverbindung mit einem ein Innengewinde 5 aufweisenden Teil 9 und einem darin einschraubbaren Schraubteil 1 weist eine zumindest über einen Teil der axialen Erstreckung des Gewindebereiches verlaufende Dichtung 2 in Ring-, Hülsen- oder Napfform auf. Dabei weist wenigstens ein Abschnitt der in Gebrauchsstellung im Bereich der Dichtung 2 befindlichen Außenseite des Schraubteiles 1, bevorzugt sein mit Gewinde versehenes Endstück 4, einen in Einschraubrichtung zunehmenden Querschnitt oder Durchmesser, so daß der in Einschraubrichtung gemäß dem Pfeil Pf1 vordere Bereich 6 einen größeren Querschnitt oder Durchmesser als der beim Einschrauben nachfolgende Bereich 7 hat. Der zwischen den Bereichen 6 und 7 liegende Bereich bewirkt bei einer der Einschraubbewegung entgegengesetzten Verdrehung eine Axialverstellung gegenüber der Dichtung 2 und damit aufgrund der etwa konischen Gestaltung deren radiale Verpressung, so daß eine Rückdrehbewegung die Dichtungswirkung nicht verschlechtert, sondern sogar verbessert.

Dabei ist die Schrägung oder Konizität der Bereiche 8 der besseren Deutlichkeit wegen übertrieben dargestellt. Zwar kann sie wie dargestellt oder noch stärker sein. Es genügen jedoch in der Praxis geringe Durchmesser-Vergrößerungen, um eine zusätzliche Verpressung beim Zurückdrehen zu erreichen.

## Patentansprüche

1. In ein Innengewinde (5) einschraubbares Schraubteil (1) mit einer zumindest über einen Teil seiner axialen Länge oder Erstreckung verlaufenden ring- oder hülsenförmigen Dichtung (2) zur Herstellung einer dichten Gewindeverbindung, dadurch gekennzeichnet, daß wenigstens ein Abschnitt der in Gebrauchsstellung im Bereich der Dichtung (2) befindlichen Außenseite des Schraubteiles (1) einen in Einschraubrichtung (Pf1) zunehmenden Querschnitt oder Durchmesser hat, so daß der in Einschraubrichtung vordere Bereich (6) einen größeren Querschnitt oder Durchmesser als der beim Einschrauben nachfolgende Bereich (7) hat.

2. Schraubteil nach Anspruch 1, dadurch gekennzeichnet, daß die Durchmesservergrößerung stetig schräg, stufenweise, konkav oder konvex gekrümmt verläuft.

3. Schraubteil nach Anspruch 1 oder 2, dadurch gekennzeichnet, daß sich der schräg oder gekrümmt erweiternde Bereich (8) zumindest teilweise in der in Einschraubrichtung vorderen Hälfte des Schraubteiles (1) oder des Gewindebereiches des Schraubteiles (1) befindet.

4. Schraubteil nach einem der Ansprüche 1 bis 3, dadurch gekennzeichnet, daß die Dichtung (2) zumindest in der verpreßten Gebrauchsstellung eine in Richtung der Durchmesserzunahme abnehmende Wanddicke hat.

5. Schraubteil nach einem der Ansprüche 1 bis 4, dadurch gekennzeichnet, daß ein Mitnehmer (11) oder Anschlag (12; 16) für die Dichtung (2) vorgesehen ist, der diese Dichtung (2) beim Einschrauben beaufschlagt und in Einschraubrichtung mitnimmt.

6. Schraubteil nach einem der Ansprüche 1 bis 5, dadurch gekennzeichnet, daß der Mitnehmer (11) oder Anschlag (12; 16) bei der der Einschraubbewegung entgegengesetzten Drehung von der Dichtung (2) wegewegbar ist.

7. Schraubteil nach einem der Ansprüche 1 bis 6, dadurch gekennzeichnet, daß der Bereich (8) zunehmenden Durchmessers zumindest über einen Teil der axialen Erstreckung eine Profilierung, insbesondere ein Gewindeprofil, aufweist.

8. Schraubteil nach einem der Ansprüche 1 bis 7, dadurch gekennzeichnet, daß im Bereich (7) des kleinsten Durchmessers des sich vergrößernden Bereiches (8) ein Bund, eine Planfläche (16) oder dergleichen angeordnet ist, die sich radial maximal bis zu dem Außengewinde (10) erstrecken kann und einen Anschlag für die Dichtung (2) bildet.

9. Schraubteil nach einem der Ansprüche 1 bis 8, dadurch gekennzeichnet, daß die im Bereich (7) des kleinsten Durchmessers des Bereiches (8) zunehmenden Querschnittes angeordnete Planfläche (16) oder dergleichen Anschlag eine Profilierung, beispielsweise eine Rändelung, als Mitnehmer für die Dichtung (2) in Drehrichtung beziehungsweise als Verdrehschutz gegenüber dem Schraubteil (1) aufweist.

10. Schraubteil nach einem der Ansprüche 1 bis 9, dadurch gekennzeichnet, daß die vom kleinsten Durchmesser (7) des Bereiches (8) zunehmenden Querschnittes ausgehende Planfläche (16) in radialer Richtung in einen schrägen oder gekrümmten Bereich (18) übergeht, der insbesondere eine Gewindeprofilierung aufweist.

11. Schraubteil nach einem der Ansprüche 1 bis 10, dadurch gekennzeichnet, daß vom kleinsten Durchmesser des Bereiches (8) zunehmenden Querschnittes nach der entgegengesetzten Richtung und entgegen der Einschraubrichtung ein gegenläufiger Konus (19) oder gekrümmter Bereich angeordnet ist, welcher insbesondere zumindest teilweise eine Profilierung, z.B. eine Rändel- oder Gewindeprofilierung, aufweist.

12. Schraubteil nach einem der Ansprüche 1 bis 11, dadurch gekennzeichnet, daß das Schraubteil (1) vor dem in Einschraubrichtung zunehmenden schrägen oder gekrümmten Bereich (8) ein Gewindeprofil (20) mit Normmaßen oder mit kleinerem Durchmesser aufweist.

13. Schraubteil nach einem der Ansprüche 1 bis 12, dadurch gekennzeichnet, daß die Dichtung (2) an ihrer Innenseite zumindest bereichsweise eine in axialer Richtung wirksame Profilierung, insbesondere ein Steigungsprofil ähnlich einem Gewindeprofil oder ein Innengewinde, aufweist.

14. Schraubteil nach einem der Ansprüche 1 bis 13, dadurch gekennzeichnet, daß die Außenseite der Dichtung (2) zumindest bereichsweise ein Außengewinde aufweist, welches einen zylindrischen und/oder konischen Verlauf hat.

15. Schraubteil nach einem der Ansprüche 1 bis 14, dadurch gekennzeichnet, daß das Außgewinde der Dichtung (2) zumindest bereichsweise gegenüber dem Innengewinde (5) des Teiles (9) ein Übermaß hat.

16. Schraubteil nach einem der Ansprüche 1 bis 15, dadurch gekennzeichnet, daß die Dichtung (2) in axialer Richtung an ihrem vorderen und/oder hinteren Bereich zylindrische und/oder konische Bereiche ohne vorgeformte Gewindegänge hat, die an der Innenseite und/oder an der Außsenseite der Dichtung (2) vorgesehen sind und in eingeschraubter Gebrauchsstellung zwischen dem Teil (9) mit Innengewinde (5) und dem Schraubteil (1) als Gegenstück verpreßt sind.

17. Schraubteil nach einem der Ansprüche 1 bis 16, dadurch gekennzeichnet, daß die Dichtung (2) an ihrem in Einschraubrichtung vorderen stirnseitigen Ende eine Bohrungsverkleinerung, z.B. einen Wulst (15), aufweist, welcher als Anschlag oder Haltekralle gegenüber dem Schraubteil (1) dient.

18. Schraubteil nach einem der Ansprüche 1 bis 17, dadurch gekennzeichnet, daß die Dichtung (2) an der in Einschraubrichtung entgegengesetzt angeordneten Stirnseite (13) eine zum Schraubteil (1) passende Profilierung, z.B. eine Rändel-Profilierung aufweist.

19. Schraubteil nach einem der Ansprüche 1 bis 18, dadurch gekennzeichnet, daß der mit einem zylindrischen oder konischen Außengewinde versehene Bereich (4) des Schraubteiles (1) durch eine Ringnut (21) unterbrochen ist, deren Nutengrund in Einschraubrichtung schräg ansteigt, so daß innerhalb der Nut (21) ein Bereich eines in Einschraubrichtung einen zunehmenden Durchmesser aufweisenden Konus gebildet ist.

20. Schraubteil nach einem der Ansprüche 1 bis 19, dadurch gekennzeichnet, daß das Schraubteil (1) an seiner Stirnseite (14) einen sich entgegen der Einschraubrichtung verjüngenden Bereich (8) oder Ansatz aufweist, der in Gebrauchsstellung mit seinem Bereich (7) kleineren Durchmessers an der Innenseite eines dazu passenden Halteansatzes oder Wulstes (15) der Dichtung (2) anliegt und in axialer Richtung eine größere Abmessung oder Breite als dieser Wulst (15) hat, so daß die Dichtung (2) durch eine axiale Relativverstellung zwischen Ansatz (8) und Wulst (15) beim teilweisen Zurückdrehen des Schraubteiles (1) aus dem Innengewinde (5) heraus zumindest im Bereich des Wulstes (15) aufweitbar ist.

21. Schraubteil nach einem der Ansprüche 1 bis 20, dadurch gekennzeichnet, daß der sich verjüngende Ansatz (8) eine unprofilierte, im wesentlichen glatte Oberfläche hat.

22. Schraubteil nach einem der Ansprüche 1 bis 21, dadurch gekennzeichnet, daß die Innenseite oder Innenöffnung des mit einem sich konisch in Einschraubrichtung erweiternden Bereiches (8) oder Ansatzes des Schraubteiles (1) zusammenwirkenden Wulstes (15) oder Bereiches der Dichtung (2) so geformt ist, daß die Außenform des Schraubteiles (1) und die Innenform der Dichtung (2) über ihren axialen Berührbereich aneinanderliegen.

23. Schraubteil nach einem der Ansprüche 1 bis 22, dadurch gekennzeichnet, daß in Einschraubrichtung gesehen vor und/oder hinter dem konischen Bereich (8) der glatt oder mit einer Außengewindeprofilierung versehen ist, ein mit dem Innengewinde (5) des Teiles (9) zusammenpassendes Zuggewinde (20; 10) vorgesehen ist.

24. Schraubteil nach einem der Ansprüche 1 bis 23, dadurch gekennzeichnet, daß das Zuggewinde (10; 20) von der Dichtung ganz oder teilweise freigelassen ist.

25. Schraubteil nach einem der Ansprüche 1 bis 24, dadurch gekennzeichnet, daß die Dichtung (2) zur Anpassung oder Erzeugung ihrer Innenprofilierung an die Außenprofilierung des Schraubteiles (1) auf dieses aufgeschraubt oder nach Aufweitung durch elastische Rückstellkräfte spätestens bei ihrer Verpressung angedrückt oder aufgespritzt ist.

26. Schraubteil nach einem der Ansprüche 1 bis 25, dadurch gekennzeichnet, daß zumindest der die Dichtung (2) aufnehmende Bereich des Schraubteiles (1) geglättet und damit relativ zu der Dichtung (2) beim Zurückschrauben entgegen der Einschraubrichtung leichter bewegbar oder drehbar als die Dichtung (2) gegenüber dem Innengewinde (5) ist.

27. Schraubteil nach einem der Ansprüche 1 bis 26, dadurch gekennzeichnet, daß das Innengewinde der Dichtung (2) und das dazu passende Gewindeprofil des Schraubteiles (1) zumindest in der verpreßten Endform bzw. Endstellung im Gewindeprofil und in der Gewindesteigung dem Innengewinde (5) des Teiles (9) entsprechen, das Gewindeprofil aber im Durchmesser entsprechend der gewünschen Wandungsdicke der Dichtung (2) kleiner gehalten ist.

28. Schraubteil nach Anspruch 27, dadurch gekennzeichnet, daß das kleiner gehaltene Gewindeprofil des Schraubteiles (1) und der Dichtung (2) sich zumindest mit dem Außendurchmesser noch im Bereich der Profiltiefe des Innengewindes (5) des Teiles (9) befindet.

29. Schraubteil nach einem der vorstehenden Ansprüche, dadurch gekennzeichnet, daß die Außenseite der Dichtung (2) an ihrem der Einschraubrichtung (Pf1) entgegengesetzten Ende einen Bund (23) aufweist, welcher in Gebrauchsstellung als Anschlag zwischen der Planfläche des Teiles (9) und der Anschlagfläche (12) des Schraubteiles (1) angeordnet und verpreßbar ist.
